# EUROPÄISCHE PATENTSCHRIFT

(11) **EP 2 746 323 B1**
(45) Veröffentlichungstag und Bekanntmachung des Hinweises auf die Patenterteilung: **30.12.2015**
(21) Anmeldenummer: 13187474.5
(22) Anmeldetag: 07.10.2013
(51) Int. Cl.: C08K 3/04, B60C 1/00, C08K 3/36, C08L 7/00, C08L 9/06, C08L 21/00, C08L 25/04

(54) **Schwefelvernetzbare Kautschukmischung**
Sulfur crosslinkable rubber composition
Composition de caoutchouc réticulable au soufre

(30) Priorität: 19.12.2012 DE 102012112596
(43) Veröffentlichungstag der Anmeldung: 25.06.2014
(73) Patentinhaber: Continental Reifen Deutschland GmbH, 30165 Hannover (DE)
(72) Erfinder: Jungk, Juliane, 30916 Isernhagen (DE); Wangenheim, Ulrike, 30966 Hemmingen (DE); Jagst, Eda, 30657 Hannover (DE)
(74) Vertreter: Finger, Karsten

(56) Entgegenhaltungen:
- EP-A1- 2 357 211
- EP-A1- 2 412 731
- JP-A- 2012 052 028
- US-A- 5 877 249
- US-A1- 2012 016 056

## Beschreibung

Die Erfindung betrifft eine schwefelvernetzbare Kautschukmischung, insbesondere für Laufstreifen von Fahrzeugluftreifen, und einen Fahrzeugluftreifen.

Harze, insbesondere Kohlenwasserstoffharze, sind seit langem bekannte Zuschlagstoffe für Kautschukmischungen für Laufstreifen von Fahrzeugluftreifen. Sie dienen vor allem als Verarbeitungshilfsmittel und bewirken die nötige Grünklebrigkeit der Kautschukmischungen. Ferner lassen sich durch Harze bestimmte Vulkanisateigenschaften wie Härte, Modul und Quellverhalten beeinflussen. Sie können auch als Vulkanisationsharze oder Haftvermittler eingesetzt werden. Typische in der Kautschukindustrie eingesetzte Klebharze sind z.B. Petroleumharze, Terpenharze, Kolophoniumharze, Phenol-Formaldehydharze und Cumaron-Inden-Harze.
Auch Harze aus alpha-Methylstyrol sind als Zuschlagstoffe für Kautschukmischungen bekannt.
In der US/2012/0016056 A1 wird beispielsweise eine Kautschukmischung für Laufstreifen mit Kieselsäure als Hauptfüllstoffkomponente offenbart, die ein Harz aus alpha-Methylstyrol und Styrol enthält. Diese Kautschukmischung soll hinsichtlich Rollwiderstandsverhalten, Nassgriffeigenschaften, Abriebwiderstand und Handling-Verhalten eine Verbesserung zeigen.
In der WO 2012/062534 A1 wird eine Kautschukmischung mit Ruß als Füllstoff offenbart, die 14 phr des gleichen Harzes enthält. Diese Kautschukmischung soll den Zielkonflikt aus Abrieb, Rollwiderstand und Nassgriff auf einem höheren Niveau lösen.
Ferner wird die Verwendung von Harzen auf Basis von alpha-Methylstyrol in Kautschukmischungen z.B. in der EP 2412731 A1, EP 1559586 A1 und der DE 60201595 T2 beschrieben. Auch diese Schriften beschäftigen sich mit den Eigenschaften der darin offenbarten Kautschukmischungen im Hinblick auf zumindest eine der Anforderungen im Reifen, wie Abriebwiderstand, Rollwiderstand und Nassgriff.
Aus den genannten Schriften gehen Eigenschaften wie Prozessierbarkeit und Reißeigenschaften, insbesondere der Weiterreißwiderstand, bei der Verbesserung hinsichtlich Abrieb, Rollwiderstand und Nassgriff nicht hervor.

Der Erfindung liegt nun die Aufgabe zugrunde, eine schwefelvernetzbare Kautschukmischung bereitzustellen, die eine weitere Verbesserung im Zielkonflikt Rollwiderstandsverhalten versus Nassgriffeigenschaften bei gleichzeitig verbesserten oder zumindest gleichen Reißeigenschaften zeigt. Zusätzlich soll die Kautschukmischung keine Einbußen hinsichtlich der Prozessierbarkeit zeigen, wobei insbesondere die Mooney-Viskosität nicht deutlich steigen und die Anvulkanisationszeit nicht zu niedrige Werte annehmen soll, um eine ausreichende Prozesssicherheit zu gewährleisten.

Gelöst wird die Aufgabe erfindungsgemäß dadurch, dass die schwefelvernetzbare Kautschukmischung wenigstens folgende Bestandteile enthält:
- 45 bis 85 phr wenigstens eines natürlichen und/oder synthetischen Polyisoprens und
- 15 bis 55 phr wenigstens eines Styrol-Butadien-Kautschuks und
- 25 bis 55 phr wenigstens eines Rußes und
- 4 bis 40 phr wenigstens einer Kieselsäure und
- 2 bis 20 phr wenigstens eines Kohlenwasserstoffharzes, wobei das Kohlenwasserstoffharz aus alpha-Methylstyrol und/oder Styrol und/oder Vinyltoluol aufgebaut ist.

Überraschenderweise liegt die erfindungsgemäße Kautschukmischung im Vergleich zum Stand der Technik auf einem höheren Performance-Niveau hinsichtlich der Indikatoren für Rollwiderstand, Nassgriff und Reißeigenschaften. Gleichzeitig zeigt die erfindungsgemäße Kautschukmischung eine gute (Mooney-Viskosität) und sichere (Anvulkanisationszeit) Prozessierbarkeit.

Die in dieser Schrift verwendete Angabe phr (Parts per hundred Parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.
Die oben genannten Kohlenwasserstoffharze werden im Rahmen dieser Erfindung nicht als Kautschuk betrachtet.

Die erfindungsgemäße Kautschukmischung enthält 45 bis 85 phr, bevorzugt 45 bis 75 phr, wenigstens eines natürlichen und/oder synthetischen Polyisoprens, welches bevorzugt ein Molekulargewicht gemäß GPC (Gelpermeationschromatographie, Polystyrol als Standard, Tetrahydrofuran (THF) als Elutionsmittel, engl. SEC = size exclusion chromatography) von größer als 200000 g/mol aufweist. Dem Fachmann ist bekannt, dass natürliches Polyisopren mit Molekulargewichten vorkommen kann, welche außerhalb des messbaren Bereiches liegen. Derartige natürliche Polyisoprene sind von der Erfindung mit eingeschlossen. Es ist des Weiteren denkbar, dass auch synthetische Polyisoprene ein Molekulargewicht aufweisen, welches außerhalb des messbaren Bereiches liegt. Auch diese synthetischen Polyisoprene sind mit eingeschlossen.
Bevorzugt beträgt das Molekulargewicht des natürlichen und/oder synthetischen Polyisoprens 200000 bis 3000000 g/mol, also zweihunderttausend bis drei Millionen g/mol. Als natürliches Polyisopren (natural rubber, NR) sind alle dem Fachmann bekannten Typen denkbar.

Die erfindungsgemäße Kautschukmischung enthält zudem 15 bis 55 phr, bevorzugt 18 bis 52 phr, besonders bevorzugt 20 bis 50 phr, wenigstens eines Styrol-Butadien-Kautschuks. Bei dem Styrol-Butadien-Copolymer kann es sich um lösungspolymerisiertes Styrol-Butadien-Copolymer (SSBR) mit einem Styrolgehalt, bezogen auf das Polymer, von 5 bis 45 Gew.-% und einem Vinylgehalt (Gehalt an 1,2-gebundenem Butadien, bezogen auf das gesamte Polymer) von 5 bis 70 Gew.-% handeln, welches zum Beispiel unter Verwendung von Lithiumalkylen in organischem Lösungsmittel hergestellt werden kann. Die SSBR können auch gekoppelt und/oder endgruppenmodifiziert und/oder entlang der Kohlenstoffkette modifiziert (engl. backbone modified) sein. Im Rahmen der vorliegenden Erfindung werden die Begriffe modifiziert und funktionalisiert synonym verwendet.
Bei der Modifizierung kann es sich um die folgenden Gruppen und Funktionalisierungen handeln: Hydroxy-Gruppen und/oder Ethoxy-Gruppen und/oder Epoxy-Gruppen und/oder Siloxan-Gruppen und/oder Amino-Gruppen und/oder Aminosiloxan und/oder CarboxylGruppen und/oder Phthalocyanin-Gruppen und/oder Alkoxysily-Gruppen und/oder Isocyanat-Gruppen. Dabei ist es denkbar, dass eine oder mehrere dieser Gruppen über eine gemeinsame Alkyl-Gruppe miteinander verknüpft sind.

Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Bevorzugt ist der Styrol-Butadien-Kautschuk lösungspolymerisiert (SSBR). Das bedeutet, dass er mittels Lösungspolymerisation hergestellt wurde. Hiermit werden besonders gute Eigenschaften hinsichtlich des Zielkonfliktes aus Rollwiderstandsverhalten und Nassgriffeigenschaften bei gleichzeitig sehr guten Reißeigenschaften erzielt.

In einer bevorzugten Ausführungsform der Erfindung ist der in der Kautschukmischung enthaltene SSBR mit wenigstens einer Amino- und wenigstens einer Trialkoxylsilyl-Gruppe endgruppenmodifiziert, wobei letztere bevorzugt eine Trimethoxysilyl-Gruppe und/oder eine Triethoxysilylgruppe ist. Aus der Kombination wenigstens einer Amino- und wenigstens einer Trialkoxylsilyl-Gruppe ergeben sich durch eine gute Anbindung an die Füllstoffe Kieselsäure und Ruß gute Rollwiderstandseigenschaften der Kautschukmischung.

In einer weiteren bevorzugten Ausführungsform der Erfindung enthält der SSBR wenigstens eine Endgruppenmodifizierung, die an Ruß anbindet.
Durch die verstärkte Anbindung dieses SSBR an Ruß ergibt sich in einer Kautschukmischung eine verbesserte Dispersion und verbesserte
Rollwiderstandsindikatoren. Hierbei sind alle dem Fachmann bekannten Funktionalisierungen, die für die Anbindung an Ruß geeignet sind, denkbar.

In einer dritten bevorzugten Ausführungsform der Erfindung ist der SSBR, der in der Kautschukmischung enthalten ist, für eine optimale Anbindung an Kieselsäure mit Hydroxy- und/oder Epoxy- und oder Alkoxylsilylgruppen endgruppenmodifiziert.

Gemäß einer bevorzugten Weiterbildung der Erfindung ist der in der Kautschukmischung enthaltene SSBR Zinn-gekoppelt, wobei dies für alle oben genannten SSBR-Typen gilt, die unfunktionalisiert oder wie oben beschrieben funktionalisiert ist.

Gemäß einer vorteilhaften Weiterbildung der Erfindung enthält die Kautschukmischung 0,1 bis 35 phr, bevorzugt 15 bis 35 phr, eines Polybutadiens.
Bei dem Polybutadien (=Butadienkautschuk, BR) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadienkautschuk) mit einem cis-Anteil von 20 bis 50 Gew.-%. Ein high-cis-Polybutadien ist z.B. Nd-BR (Neodym-katalysierter Butadienkautschuk). Mit Nd-BR werden besonders gute Abriebeigenschaften der Kautschukmischung erzielt.
Das eingesetzte Polybutadien kann endgruppenmodifiziert sein. Bei der Modifizierung kann es sich um die oben beschriebenen Gruppen und Funktionalisierungen handeln.

Die erfindungsgemäße Kautschukmischung enthält 25 bis 55 phr wenigstens eines Rußes. Der wenigstens eine Ruß weist eine Jodadsorptionszahl gemäß ASTM D 1510 von 60 bis 250 g/kg, bevorzugt 75 bis 250 g/kg, besonders bevorzugt 75 bis 200 g/kg und ganz besonders bevorzugt 75 bis 150 g/kg, und eine CTAB-Zahl gemäß ASTM D 3765 von 60 bis 240 m²/g, bevorzugt 60 bis 200 m²/g, besonders bevorzugt 60 bis 150 m²/g, und eine DBP-Zahl gemäß ASTM D 2414 von 90 bis 250 ml/100 g, bevorzugt 90 bis 200 ml/100 g und besonders bevorzugt 90 bis 170 ml/100 g, auf.

Als zweiten Füllstoff enthält die Kautschukmischung 4 bis 40 phr, bevorzugt 4 bis 30 und besonders bevorzugt 4 bis 25 phr, wenigstens einer Kieselsäure.
Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 80 bis 350 m²/g, bevorzugt von 80 bis 250 m²/g, besonders bevorzugt 130 bis 215 m²/g und eine CTAB-Oberfläche (gemäß ASTM D 3765) von 80 bis 350 m²/g, bevorzugt von 80 bis 245 m²/g, besonders bevorzugt von 125 bis 205 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Die Kautschukmischung kann außerdem noch andere polare Füllstoffe, wie beispielsweise Alumosilicate, Kreide, Stärke, Magnesiumoxid, Titandioxid oder Kautschukgele enthalten.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält.
Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

In einer bevorzugten Ausführungsform werden in der Kautschukmischung zwei verschiedene Silane in Kombination miteinander eingesetzt. Bevorzugt werden dabei ein Mercaptosilan, bevorzugt 3-Mercaptopropyltriethoxysilan wie z.B: Si263^{®} der Fa. Evonik, und ein Silan mit 75 Gew.-% Disulfiden, wie z.B. SG SI 996, Fa. Nanjing Shuguang Silane Co. LTD. Hieraus ergeben sich verbesserte Rollwiderstandsprediktoren, wie z.B. eine höhere Rückprallelastizität bei 70 °C und ein niedrigerer tan delta (tan δ) bei 70 °C, bei gleichbleibenden sonstigen Eigenschaften der Kautschukmischung.

Gemäß einer bevorzugten Ausführungsform der Erfindung werden in der Kautschukmischung zwei verschiedene Silane in Kombination mit einem Prozesshilfsmittel eingesetzt, welches bevorzugt ein Tensid und besonders bevorzugt ein PEG-Carbonsäureester ist. Hierdurch ist eine ausreichende Prozesssicherheit im Hinblick auf die Anvulkanisationszeit t₁₀ gegeben. Diese erreicht ausreichende Werte, sodass ein unerwünschtes Vorvulkanisiern z.B: während der Extrusion (Scorchen) vermieden wird. Gleichzeitig weist die Kautschukmischung gute physikalische Eigenschaften im Hinblick auf Reißfestigkeit und Rollwiderstandsverhalten auf. Unter Tensiden werden hierbei gemäß Römpp, Online Version 3.28 "grenzflächenaktive Stoffe" verstanden. Tenside sind gemäß Römpp, Online Version 3.28 amphiphile (bifunktionelle) Verbindungen mit mindestens einem hydrophoben und einem hydrophilen Molekülteil.

Erfindungsgemäß enthält die Kautschukmischung 2 bis 20 phr, bevorzugt 2 bis 15 phr, wenigstens eines Kohlenwasserstoffharzes, wobei das Kohlenwasserstoffharz aus alpha-Methylstyrol und/oder Styrol und/oder Vinyltoluol aufgebaut ist. Das wenigstens eine Kohlenwasserstoffharz kann daher ein Homopolymer und/oder ein Copolymer sein. Unter Homopolymer wird in der vorliegenden Anmeldung ein Polymer verstanden, welches gemäß Römpp Online Version 3.28 "aus Monomeren nur einer Art entstanden ist".
Unter Copolymer wird im Rahmen der vorliegenden Erfindung ein Polymer verstanden, welches aus mehreren verschiedenen Monomeren aufgebaut ist.
Bei dem Vinyl-Toluol (auch ar-Methylstyrol) kann es sich um p-Vinyltoluol und/oder m-Vinyltoluol und/oder o-Vinyltoluol handeln.

Das in der erfindungsgemäßen Kautschukmischung enthaltene Kohlenwasserstoffharz, weist einen Erweichungspunkt gemäß ASTM E 28 (Ring und Ball) von 70 bis 110 °C auf.

Hierdurch werden besonders gute Eigenschaften der Kautschukmischung hinsichtlich der Anforderungen an Rollwiderstand, Nassgriff und Reißeigenschaften inkl. Weiterreißwiderstand erzielt.

Weiterhin weist das in der erfindungsgemäßen Kautschukmischung enthaltene Kohlenwasserstoffharz bevorzugt ein Molekulargewicht Mw von 500 bis 1500 g/mol, bevorzugt 1000 bis 1500 g/mol auf. Die Bestimmung des Molekulargewichtes erfolgt mittels Gelpermeationschromatographie gemäß DIN 55672-1 (GPC mit Tetrahydofuran als Elutionsmittel, Polystyrol-Standard; Größenausschlußchromatographie; engl. SEC = size exclusion chromatography).

Bevorzugt ist das Kohlenwasserstoffharz wenigstens aus alpha-Methylstyrol aufgebaut. Hierdurch zeigen sich, insbesondere in Kombination mit lösungspolymerisiertem Styrol-Butadien-Kautschuk, sehr gute Eigenschaften der erfindungsgemäßen Kautschukmischung im Hinblick auf den Zielkonflikt aus Rollwiderstandsverhalten und Nassgriffeigenschaften.

In einer bevorzugten Ausführungsform der Erfindung, enthält die Kautschukmischung ein Kohlenwasserstoffharz, welches auf alpha-Methylstyrol basiert.
Bevorzugt weist das Kohlenwasserstoffharz, welches auf alpha-Methylstyrol basiert, einen Erweichungspunkt gemäß ASTM E 28 (Ring und Ball) von 90 bis 110 °C auf. Ein derartiges Kohlenwasserstoffharz mit einem Erweichungspunkt von 96 bis 104 °C ist z.B. unter dem Handelsnamen Kristalex™ F100 Hydrocarbon Resin der Firma Eastman Chemical BV erhältlich, wie z.B. aus der EP 1474495 B1 hervorgeht.

In einer weiteren bevorzugten Ausführungsform der Erfindung, enthält die Kautschukmischung ein Kohlenwasserstoffharz, welches ein Copolymer aus alpha-Methylstyrol und Styrol ist.
Bevorzugt weist das Kohlenwasserstoffharz, welches ein Copolymer aus alpha-Methylstyrol und Styrol ist, einen Erweichungspunkt gemäß ASTM E 28 (Ring und Ball) von 75 bis 95 °C auf.

Ein derartiges Kohlenwasserstoffharz mit einem Erweichungspunkt von 80 bis 90 °C ist z.B. unter dem Handelsnamen SYLVATRAXX^{®} 4401 der Firma Arizona Chemical Company erhältlich.

In einer dritten bevorzugten Ausführungsform der Erfindung, enthält die Kautschukmischung ein Kohlenwasserstoffharz, welches ein Copolymer aus alpha-Methylstyrol und Vinyltoluol ist. Bevorzugt weist das Kohlenwasserstoffharz, welches ein Copolymer aus alpha-Methylstyrol und Vinyltoluol ist, einen Erweichungspunkt gemäß ASTM E 28 (Ring und Ball) von 90 bis 110 °C auf. Ein derartiges Kohlenwasserstoffharz mit einem Erweichungspunkt von 98 °C ist z.B. unter dem Handelsnamen Piccotex™ 100 Hydrocarbon Resin der Firma Eastman Chemical BV erhältlich, wie beispielsweise aus der US 2009/0114343 A1 hervorgeht.

Gemäß einer vorteilhaften Weiterbildung der Erfindung weist die Kautschukmischung eine im Vergleich zum Stand der Technik geringe Menge an zusätzlichen Weichmachern auf. Unter zusätzlichen Weichmachern werden alle dem Fachmann bekannten außer den genannten Kohlenwasserstoffharzen verstanden. Zusätzliche Weichmacher umfassen im Rahmender vorliegenden Erfindung aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL) oder Faktisse oder Weichmacherharze oder Flüssig-Polymere (wie Flüssig-BR), deren mittleres Molekulargewicht (Bestimmung per GPC = gel permeation chromatography, in Anlehnung an DIN 55672-1) zwischen 500 und 25000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Die Menge an zusätzlichen Weichmachern beträgt bevorzugt zwischen 0 und 5 phr.

Gemäß einer besonders bevorzugten Ausführungsform der Erfindung ist die Kautschukmischung frei von zusätzlichen Weichmachern. Somit ist die

Kautschukmischung gemäß dieser bevorzugten Ausführungsform frei von einem Mineralölweichmacher.
In der erfindungsgemäßen Kautschukmischung kann aufgrund der Bestandteile auf Mineralölweichmacher verzichtet werden ohne Einbußen bei der Prozessierbarkeit hinnehmen zu müssen.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid (ZnO) und Fettsäuren (z. B. Stearinsäure),
c) Wachse,
d) Harze außer den genannten Kohlenwasserstoffharzen
e) Mastikationshilfsmittel, wie z. B. 2,2'-Dibenzamidodiphenyldisulfid (DBD).

Bevorzugt enthält die Kautschukmischung wenigstens ein Zinkoxid als Aktivator. Dabei kommen alle dem Fachmann bekannten Zinkoxid-Typen in Frage. So kann das eingesetzte ZnO z.B. als Pulver oder Granulat vorliegen. Es kann sich des Weiteren auch um nanoskaliges Zinkoxid handeln.
In der erfindungsgemäßen Kautschukmischung wird Zinkoxid in vergleichsweise geringen Mengen eingesetzt. Die Menge an Zinkoxid beträgt dabei 0,1 bis 4 phr, bevorzugt 0,1 bis 3,5 phr und besonders bevorzugt 2,5 bis 3,5 phr. In einer besonders bevorzugten Ausführungsform der Erfindung beträgt die Menge an Zinkoxid in der Kautschukmischung 2,8 bis 3,2 phr.

Die Vulkanisation der erfindungsgemäßen Kautschukmischung wird in Anwesenheit von Schwefel oder Schwefelspendern mit Hilfe von Vulkanisationsbeschleunigern durchgeführt, wobei einige Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Die Begriffe Schwefelspender und schwefelspendende Substanz werden im Rahmen dieser Anmeldung synonym verwendet. Des Weiteren ist der Begriff Schwefeldonor für Schwefelspender gebräuchlich.
Der Beschleuniger ist ausgewählt aus der Gruppe enthaltend Thiazolbeschleuniger und/oder Mercaptobeschleuniger und/oder Sulfenamidbeschleuniger und/oder Thiocarbamatbeschleuniger und/oder Thiurambeschleuniger und/oder Thiophosphatbeschleuniger und/oder Thioharnstoffbeschleuniger und/oder Xanthogenat-Beschleuniger und/oder Guanidin-Beschleuniger.
In einer bevorzugten Ausführungsform der Erfindung wird ein Sulfenamidbeschleuniger, der ausgewählt ist aus der Gruppe enthaltend N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS) verwendet.

Gemäß einer vorteilhaften Weiterbildung der Erfindung wird mehr als ein Beschleuniger eingesetzt. In einer bevorzugten Ausführungsform der Erfindung wird ein Sulfenamidbeschleuniger, besonders bevorzugt TBBS, in Kombination mit vergleichsweise geringen Mengen des Guanidin-Beschleunigers DPG (Diphenylguanidin) eingesetzt. Die Menge an DPG beträgt dabei 0 bis 2 phr, bevorzugt 0 bis 1 phr, besonders bevorzugt 0,1 bis 0,9 phr, ganz besonders bevorzugt 0,35 bis 0,85 phr.
Gemäß einer besonders vorteilhaften Ausführungsform der Erfindung ist die Kautschukmischung frei von DPG, d.h. sie enthält 0 bis 0,2 phr DPG, bevorzugt 0 phr DPG. Im Stand der Technik bekannte Kautschukmischungen enthalten üblicherweise DPG. Da dies eine Chemikalie ist, die ein gesundheits- und umweltgefährdendes Potential besitzt, ist man bestrebt, DPG in möglichst geringen Mengen einzusetzen. Es ist jedoch bekannt, dass ein Verzicht von DPG oder vergleichbarer Agenzien in schwefelvernetzbaren Kautschukmischungen normalerweise zu einer Verschlechterung der physikalischen Eigenschaften und der Prozessierbarkeit führt.

In einer weiteren bevorzugten Ausführungsform der Erfindung erfolgt die Vulkanisation in Anwesenheit einer schwefelspendenden Substanz. Als schwefelspendende Beschleuniger kommen dabei alle dem Fachmann bekannten in Frage. Die schwefelspendende Substanz ist dabei bevorzugt ausgewählt aus der Gruppe enthaltend z.B. Thiuramdisulfide , wie z.B. Tetrabenzylthiuramdisulfid (TBzTD) und/oder Tetramethylthiuramdisulfid (TMTD) und/oder Tetramethylthiurammonosulfid (TMTM) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.
DipDis (Bis-(Diisopropyl)thiophosphoryldisulfid) und/oder Bis(O,O-2-ethylhexylthiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide und/oder 3,3'-Bis(triethoxysilylpropyl)tetrasulfid (TESPT).
Somit können auch Silane, die während der Vulkanisation Schwefel abgeben können, an der Vulkanisation beteiligt sein.

Bei der Vulkanisation in Anwesenheit eines Schwefelspenders ist der Zusatz einer vergleichsweise geringen Menge (zwischen 0 und 0,3 phr) an elementarem Schwefel notwendig.
In einer bevorzugten Ausführungsform der Erfindung handelt es sich bei der schwefelspendenden Substanz um Tetrabenzylthiuramdisulfid (TBzTD).

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049261 A2 beschrieben sind, können in der Kautschukmischung eingesetzt werden.
Außerdem können in der Kautschukmischung Vulkanisationsverzögerer vorhanden sein.

Bevorzugte Ausführungsformen der Zusammensetzung der Kautschukmischung sind die im Folgenden genannten, wobei für sämtliche Bestandteile die oben genannten bevorzugten Ausführungsformen gelten.

Gemäß einer bevorzugten Ausführungsform der Erfindung enthält die Kautschukmischung 45 bis 55 phr NR, 0 bis 30 phr BR, 20 bis 55 phr SSBR, 28 bis 38 phr Ruß, 17 bis 27 phr Kieselsäure, 0 phr eines weiteren Weichmachers wie Mineralölweichmacher, 0,6 bis 0,9 phr DPG, 0,8 bis 1,4 phr eines Sulfenamidbeschleunigers, 0,8 bis 1,4 phr elementarer Schwefel, 4 bis 6 phr eines Harzes, welches wenigstens auf alpha-Methylstyrol basiert. Eine derartige Kautschukmischung zeigt neben einer Verbesserung im Zielkonflikt Rollwiderstand versus Nassgriff im Vergleich zum Stand der Technik verbesserte Reißeigenschaften und eine verbesserte Prozesssicherheit im Hinblick auf das Scorch-Verhalten.

Gemäß einer weiteren bevorzugten Ausführungsform der Erfindung enthält die Kautschukmischung 45 bis 55 phr NR, 0 bis 30 phr BR, 20 bis 55 phr SSBR, 28 bis 38 phr Ruß, 17 bis 27 phr Kieselsäure, 0 phr eines weiteren Weichmachers wie Mineralölweichmacher, 0,6 bis 0,9 phr DPG, 1,2 bis 1,4 phr eines schwefelspendenden Beschleunigers, 0,1 bis 0,3 phr elementarer Schwefel, 4 bis 6 phr eines Harzes, welches wenigstens auf alpha-Methylstyrol basiert. Eine derartige Kautschukmischung zeigt neben einer Verbesserung im Zielkonflikt Rollwiderstand versus Nassgriff im Vergleich zum Stand der Technik verbesserte Reißeigenschaften.

Gemäß einer weiteren bevorzugten Ausführungsform der Erfindung enthält die Kautschukmischung 45 bis 75 phr NR, 25 bis 55 phr SSBR, 38 bis 48 phr Ruß, 4 bis 8 phr Kieselsäure, 0,3 bis 0,6 phr eines Mercaptosilans, 0,7 bis 1,3 phr eines Silans mit 75 Gew.-% Disulfiden, 0,4 bis 0,8 phr eines Tensides, 0 phr eines weiteren Weichmachers wie Mineralölweichmacher, 0 phr DPG, 0,8 bis 1,4 phr eines Sulfenamidbeschleunigers, 0,8 bis 2 phr elementarer Schwefel, 4 bis 11 phr eines Harzes, welches wenigstens auf alpha-Methylstyrol basiert. Eine derartige Kautschukmischung zeigt neben einer Verbesserung im Zielkonflikt Rollwiderstand versus Nassgriff im Vergleich zum Stand der Technik ein verbessertes Nassbremsverhalten und Handling-Verhalten sowie eine verringerte Mooney-Viskosität und damit verbesserte Prozessierbarkeit und eine verbesserte Prozesssicherheit im Hinblick auf das Scorch-Verhalten.

Der Erfindung liegt weiterhin die Aufgabe zugrunde einen Fahrzeugluftreifen bereitzustellen, der eine Verbesserung hinsichtlich des Zielkonfliktes aus Nassgriffeigenschaften, Rollwiderstandsverhalten und Reißeigenschaften zeigt.
Gelöst wird die Aufgabe dadurch, dass der Fahrzeugluftreifen in wenigstens einem Bauteil die erfindungsgemäße Kautschukmischung enthält. Bevorzugt handelt es sich bei dem Bauteil um einen Laufstreifen oder in der Cap bei einem Laufstreifen mit Cap/Base-Aufbau.
Bevorzugt ist die erfindungsgemäße Kautschukmischung im Laufstreifen oder in der Cap bei einem Laufstreifen mit Cap/Base-Aufbau eines Fahrzeugluftreifens für LKW und/oder Baustellenfahrzeuge und/oder Busse geeignet und wird daher bevorzugt in Fahrzeugluftreifen der genannten Fahrzeugtypen verwendet. Hiermit handelt es sich um Fahrzeuge, die Reifen mit einem Lastindex (engl. load index, LI) von größer oder gleich 122 und einem Geschwindigkeitssymbol (engl. speed symbol) von kleiner oder gleich M erfordern.
Derartige Fahrzeugluftreifen unterliegen aufgrund der Einsatzgebiete unter im Vergleich zu PKW-Reifen vergleichsweise hoher Last besonderen Anforderungen.
Neben dem Zielkonflikt aus Rollwiderstand und Nassgriff, spielen insbesondere das Handling-Verhalten und die Abrieb- und Reißfestigkeit unter Last eine wesentliche Rolle.

Die Kautschukmischung kann aber auch in der Seitenwand und/oder in den inneren Bauteilen eines Fahrzeugluftreifens, den sogenannten Body-Bauteilen, zum Einsatz kommen.

Die Kautschukmischung ist weiterhin zur Verwendung in technischen Kautschukartikeln wie z.B. Transportbändern, Riemen, Gurten, Schläuchen, Drucktüchern, Luftfedern oder Dämpfungselementen geeignet.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel, Schwefelspender und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z.B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden.
Die Erfindung soll nun anhand von Vergleichs- und Ausführungsbeispielen, die in Tabelle 1 zusammengefasst sind, näher erläutert werden.

Die Vergleichsmischungen sind mit V, die erfindungsgemäßen Mischungen sind mit E gekennzeichnet.

Die Mischungsherstellung erfolgte unter üblichen Bedingungen in drei Stufen in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Mooney-Viskosität, ML 1+3 und ML 1+4, bei 100 °C gemäß ASTM D1646; Mooney-Einheiten mit Mooney abgekürzt
- Umsatzzeiten von 10% Umsatz (t₁₀ Anvulkanisationszeit) und 90% Umsatz (t₉₀, Ausvulkanisationszeit) mittels rotorlosem Vulkameter (MDR = Moving Disc Rheometer) gemäß DIN 53 529
- Shore-A-Härte bei Raumtemperatur (RT) und bei 70 °C gemäß DIN ISO 7619-1
- Rückprallelastizität bei RT und 70 °C gemäß DIN 53 512
- Zugfestigkeit, Reißdehnung und Spannungswert bei 300% statischer Dehnung (Modul 300) bei Raumtemperatur gemäß DIN 53 504
- Hochgeschwindigkeitsbruchdehnung als Reißenergie pro verformtem Volumen bei Raumtemperatur gemäß High Speed Tear Energy Test (HSTE) nach DIN EN 10 045
- Abrieb nach Grosch gemäß Grosch, K.A., the 131th ACS Rubber Div. Meeting, No. 97 (1987) und Grosch, K.A. et al., Kautschuk Gummi Kunststoffe, 50, 841 (1997)
- Weiterreißwiderstand nach Graves bei Raumtemperatur (RT) und 100 °C in Anlehnung an ISO 34-1, jeweils bei einer Temperatur arithmetisches Mittel der Werte über parallel und senkrecht zur Walzrichtung ausgestanzte Probekörper

**Tabelle 1**

| **Bestandteile** | **Einh.** | **V1** | **V2** | **E1** | **E2** | **V3** | **V4** | **E3** | **E4** |
|---|---|---|---|---|---|---|---|---|---|
| NR | phr | 50 | 50 | 50 | 50 | 50 | 50 | 50 | 50 |
| BR^{a)} | phr | 25 | - | 25 | - | 25 | - | 25 | - |
| SBR ^{b)} | phr | 25 | 50 | 25 | 50 | 25 | 50 | 25 | 50 |
| Ruß N121 ^{c)} | phr | 33 | 33 | 33 | 33 | 33 | 33 | 33 | 33 |
| Kieselsäure ^{d)} | phr | 22 | 22 | 22 | 22 | 22 | 22 | 22 | 22 |
| Silan ^{e)} | phr | 3,52 | 3,52 | 3,52 | 3,52 | 4,48 | 4,48 | 4,48 | 4,48 |
| Weichmacher ^{f)} | phr | 5 | 5 | - | - | 5 | 5 | - | - |
| Harz ^{g)} | phr | - | - | 5 | 5 | - | - | 5 | 5 |
| Alterungsschutzmittel | phr | 6 | 6 | 6 | 6 | 6 | 6 | 6 | 6 |
| Stearinsäure | phr | 2 | 2 | 2 | 2 | 2 | 2 | 2 | 2 |
| Zinkoxid | phr | 3 | 3 | 3 | 3 | 3 | 3 | 3 | 3 |
| Beschleuniger TBzTD ^{h)} | phr | - | - | - | - | 1,31 | 1,31 | 1,31 | 1,31 |
| Beschleuniger DPG | phr | 0,79 | 0,79 | 0,79 | 0,79 | 0,79 | 0,79 | 0,79 | 0,79 |
| Beschleuniger TBBS ⁱ⁾ | phr | 1,1 | 1,1 | 1,1 | 1,1 | 1,18 | 1,18 | 1,18 | 1,18 |
| Elementarer Schwefel | phr | 1,1 | 1,1 | 1,1 | 1,1 | 0,15 | 0,15 | 0,15 | 0,15 |

| **Eigenschaften** | | | | | | | | | |
|---|---|---|---|---|---|---|---|---|---|
| t₁₀ | min | 1,5 | 1,4 | 2,7 | 2,7 | 2,3 | 2,3 | 2,3 | 2,3 |
| t₉₀ | min | 3,8 | 4,6 | 6,5 | 7,3 | 10,7 | 11,6 | 10,5 | 11,9 |
| Mooney ML (1+3) bei 100 °C | Mooney | 93 | 96 | 88 | 92 | 85 | 87 | 88 | 92 |
| Shore Härte bei RT | Shore A | 62 | 61 | 62 | 61 | 63 | 62 | 63 | 63 |
| Shore Härte bei 70 °C | Shore A | 58 | 57 | 58 | 57 | 58 | 57 | 58 | 57 |
| Rückprallelast. bei RT | % | 51 | 48 | 47 | 45 | 47 | 46 | 46 | 43 |
| Rückprallelast. bei 70 °C | % | 61 | 59 | 57 | 57 | 57 | 57 | 58 | 55 |
| Diff. Rückprallelast. (70°C-RT) | | 10 | 11 | 10 | 12 | 10 | 11 | 12 | 12 |
| Graves b. 100 °C | N/mm | 46 | 46 | 50 | 52 | 41 | 35 | 40 | 39 |
| HSTE | MJ/m³ | 5,3 | 6,4 | 7,0 | 8,0 | 5,0 | 6,0 | 5,0 | 6,5 |
| Zugfestigkeit bei RT | MPa | 19 | 23 | 22 | 22 | 18 | 20 | 19 | 21 |
| Reißdehnung bei RT | % | 461 | 537 | 551 | 563 | 447 | 490 | 454 | 502 |
| Modul 300 % | MPa | 12 | 11 | 11 | 10 | 12 | 11 | 12 | 11 |

| | | | | | | | | | |
|---|---|---|---|---|---|---|---|---|---|
| Verwendete Substanzen aus Tabelle 1 ^{a)} BR: Europrene^{®} Neocis BR 40, Fa. Polimeri Europa ^{b)} SBR:Nipol^{®} NS612, Fa. Zeon ^{c)} Birla Carbon N121: Jodadsorptionszahl = 121 g/kg, CTAB-Zahl = 121 m²/g ^{d)} Kieselsäure: Zeosil^{®} Z1165 MP, Fa. Rhodia ^{e)} Silan X50-S^{®}, Fa. Evonik: Silan auf Ruß aufgezogen, 50 Gew.-% Silan Si 69^{®}; 50 Gew.-% Ruß N 330: Rußmenge ist in der Angabe in Tabelle 1 nicht enthalten ^{f)} Öl: MES (medium extraction solvate), Catenex SNR, Fa. Shell, Petit Couronne, Frankreich ^{g)} Harz: Copolymer aus alpha-Methylstyrol und Styrol, Sylvatraxx® 4401, Fa. Arizona Chemical Company ^{h)} Tetrabenzylthiuramdisulfid: Perkaci, Fa. Flexsys ⁱ⁾ N-tert.Butyl-2-benzothiazylsulfenamid: Rubenamid T/Gr, Fa. General Quimica S.A., Spanien | | | | | | | | | |

Wie aus der Tabelle 1 hervorgeht, zeigen die erfindungsgemäßen Beispiele E2, E3 und E4 im Vergleich zu ihren jeweiligen Vergleichsmischungen V2, V3 und V4 eine größere Differenz der Rückprallelastizitäten bei Raumtemperatur und 70 °C, welches ein Indikator dafür ist, dass die erfindungsgemäßen Kautschukmischungen auf einem höheren Niveau im Zielkonflikt Rollwiderstandsverhalten vs. Nassgriffeigenschaften liegen. Gleichzeitig zeigen die erfindungsgemäßen Beispiele E1, E2 und E4 gegenüber ihren jeweiligen Vergleichsmischungen V1, V2 und V4 verbesserte Reißeigenschaften, und zwar einen erhöhten Weiterreißwiderstand (Graves) sowie eine erhöhte Reißenergie (HSTE). Zusätzlich zeigen die erfindungsgemäßen Kautschukmischungen eine gegenüber der jeweiligen Vergleichsmischung gleiche oder erhöhte Anvulkanisationszeit t₁₀, was eine erhöhte Prozesssicherheit der erfindungsgemäßen Kautschukmischungen im Hinblick auf das Scorch-Verhalten (unerwünschtes Vorvulkanisieren während der Herstellung von Reifenbauteilen, z.B. bei der Extrusion) bedeutet.

**Tabelle 2**

| **Bestandteile** | **Einh.** | **V5** | **E5** | **E6** | **V6** | **E7** | **E8** | **V7** | **E9** | **E10** |
|---|---|---|---|---|---|---|---|---|---|---|
| NR | phr | 70 | 70 | 70 | 60 | 60 | 60 | 50 | 50 | 50 |
| SBR ^{a)} | phr | 30 | 30 | 30 | 40 | 40 | 40 | 50 | 50 | 50 |
| Ruß N339 ^{b)} | phr | 43 | 43 | 43 | 43 | 43 | 43 | 43 | 43 | 43 |
| Kieselsäure ^{c)} | phr | 6 | 6 | 6 | 6 | 6 | 6 | 6 | 6 | 6 |
| Silan ^{d)} | phr | 0,45 | 0,45 | 0,45 | 0,45 | 0,45 | 0,45 | 0,45 | 0,45 | 0,45 |
| Silan mit 75 % S2 ^{e)} | phr | 1 | 1 | 1 | 1 | 1 | 1 | 1 | 1 | 1 |
| Weichmacher ^{f)} | phr | 1,4 | - | - | 1,4 | - | - | 1,4 | - | - |
| Prozesshilfsmittel ^{g)} | phr | 0,6 | 0,6 | 0,6 | 0,6 | 0,6 | 0,6 | 0,6 | 0,6 | 0,6 |
| Harz ^{h)} | phr | - | 5 | 10 | | 5 | 10 | | 5 | 10 |
| Alterungsschutzmittel | phr | 4,5 | 4,5 | 4,5 | 4,5 | 4,5 | 4,5 | 4,5 | 4,5 | 4,5 |
| Stearinsäure | phr | 2 | 2 | 2 | 2 | 2 | 2 | 2 | 2 | 2 |
| Zinkoxid | phr | 3 | 3 | 3 | 3 | 3 | 3 | 3 | 3 | 3 |
| Beschleuniger TBBS ⁱ⁾ | | 0,95 | 1,1 | 1,2 | 0,95 | 1,1 | 1,2 | 0,95 | 1,1 | 1,2 |
| Elementarer Schwefel | phr | 1,3 | 1,5 | 1,7 | 1,3 | 1,5 | 1,7 | 1,3 | 1,5 | 1,7 |

| **Eigenschaften** | | | | | | | | | | |
|---|---|---|---|---|---|---|---|---|---|---|
| t₁₀ | min | 2,1 | 2,3 | 2,6 | 2,4 | 2,7 | 2,5 | 2,4 | 2,6 | 2,7 |
| t₉₀ | min | 6 | 5,9 | 6,3 | 7,2 | 6,9 | 6,4 | 8,3 | 7,5 | 7,3 |
| Mooney ML (1+4) bei 100 °C | Mooney | 65 | 61 | 55 | 68 | 63 | 56 | 68 | 64 | 57 |
| Shore Härte bei RT | Shore A | 57 | 57 | 56 | 58 | 57 | 56 | 58 | 57 | 56 |
| Shore Härte bei 70 °C | Shore A | 52 | 53 | 51 | 53 | 52 | 52 | 53 | 53 | 52 |
| Rückprallelast. bei RT | % | 42 | 38 | 34 | 40 | 36 | 31 | 38 | 33 | 29 |
| Rückprallelast. bei 70 °C | % | 61 | 62 | 62 | 60 | 62 | 62 | 60 | 61 | 62 |
| Diff. Rückprallelast. (70°C-RT) | | 19 | 24 | 28 | 20 | 26 | 31 | 22 | 28 | 33 |
| Graves b. RT | N/mm | 101 | 93 | 64 | 57 | 58 | 42 | 38 | 41 | 38 |
| Graves b. 100 °C | N/mm | 56 | 49 | 49 | 50 | 43 | 45 | 46 | 45 | 38 |
| HSTE | MJ/m³ | 9,7 | 9,1 | 9,1 | 9,2 | 8,3 | 8,0 | 7,7 | 7,7 | 8,0 |
| Zugfestigkeit bei RT | MPa | 20 | 23 | 21 | 22 | 23 | 19 | 20 | 21 | 21 |
| Reißdehnung bei RT | % | 489 | 543 | 525 | 556 | 550 | 480 | 495 | 521 | 520 |
| Modul 300 % | MPa | 11 | 11 | 11 | 11 | 11 | 11 | 11 | 11 | 11 |

| | | | | | | | | | | |
|---|---|---|---|---|---|---|---|---|---|---|
| Verwendete Substanzen aus Tabelle 2 ^{a)} SBR: Sprintan SLR4601, Fa. Styron ^{b)} Corax N339: Jodadsorptionszahl = 90 g/kg, CTAB-Zahl = 88 m²/g ^{c)} Kieselsäure: Ultrasil^{®} VN3 GR, Fa. Evonik ^{d)} Silan: Si263, Fa. Evonik ^{e)} Silan mit 75 % S2: SG SI 996, Fa. Nanjing Shuguang Silane Co. LTD., China ^{f)} Öl: MES, Catenex SNR, Fa. Shell, Petit Couronne, Frankreich ^{g)} PEG-Carbonsäureester: Struktol AW1 ^{h)} Harz: Copolymer aus alpha-Methylstyrol und Styrol, Sylvatraxx® 4401, Fa. Arizona Chemical Company ⁱ⁾ N-tert.Butyl-2-benzothiazylsulfenamid | | | | | | | | | | |

Wie aus der Tabelle 2a hervorgeht, zeigen die erfindungsgemäßen Beispiele E5 und E6, E7 und E8 sowie E9 und E10 gegenüber den jeweiligen Vergleichsbeispielen V5 (Vgl. für E5 und E6), V6 (Vgl. für E7 und E8) und V7 (Vgl. für E9 und E10) eine größere Differenz der Rückprallelastizitäten bei RT und 70 °C. Dies ist ein Indikator für eine Verbesserung der erfindungsgemäßen Kautschukmischungen im Hinblick auf den Zielkonflikt aus Rollwiderstandsverhalten und Nassgriffeigenschaften.
Zusätzlich zeigen die erfindungsgemäßen Kautschukmischungen eine gegenüber der jeweiligen Vergleichsmischung gleiche oder erhöhte Anvulkanisationszeit t₁₀, was eine erhöhte Prozesssicherheit der erfindungsgemäßen Kautschukmischungen im Hinblick auf das Scorch-Verhalten (unerwünschtes Vorvulkanisieren während der Herstellung von Reifenbauteilen, z.B. bei der Extrusion) bedeutet.

**Tabelle 3**

| **Bestandteile** | **Einh.** | **V8** | **E11** | **V9** | **E12** | **V10** | **E13** |
|---|---|---|---|---|---|---|---|
| NR ^{a)} | phr | 50 | 50 | 50 | 50 | 60 | 60 |
| BR ^{b)} | phr | 25 | 25 | 30 | 30 | 20 | 20 |
| SBR ^{c)} | phr | 25 | 25 | - | - | - | - |
| SBR ^{d)} | phr | - | - | 20 | 20 | - | - |
| SBR ^{e)} | phr | - | - | - | - | 20 | 20 |
| Ruß N339 ^{f)} | phr | 45 | 45 | 45 | 45 | 43 | 43 |
| Kieselsäure ^{g)} | phr | 20 | 20 | 20 | 20 | 16 | 16 |
| Silan ^{h)} | phr | 2,44 | 2,44 | 2,44 | 2,44 | - | - |
| Silan, S2ⁱ⁾ | phr | - | - | - | - | 1,8 | 1,8 |
| Weichmacher^{j)} | phr | 12 | - | 12 | - | 1,7 | - |
| Harz ^{k)} | phr | - | 12 | - | 12 | - | 5 |
| Alterungsschutzmittel | phr | 5,5 | 5,5 | 5,5 | 5,5 | 5,5 | 5,5 |
| Stearinsäure | phr | 2 | 2 | 2 | 2 | 2 | 2 |
| Zinkoxid | phr | 3 | 3 | 3 | 3 | 3 | 3 |
| Beschleuniger DPG | phr | 0,4 | 0,4 | 0,4 | 0,4 | - | - |
| Beschleuniger TBBS ^{l)} | phr | 1,4 | 1,4 | 1,4 | 1,4 | 0,95 | 0,95 |
| Elementarer Schwefel | phr | 1,4 | 1,4 | 1,4 | 1,4 | 1,3 | 1,3 |

| **Eigenschaften** | | | | | | | |
|---|---|---|---|---|---|---|---|
| Shore Härte bei RT | Shore A | 61 | 61 | 62 | 62 | 60 | 59 |
| Rückprallelast. bei RT | % | 48 | 44 | 46 | 42 | 45 | 43 |
| Rückprallelast. bei 70 °C | % | 58 | 58 | 56 | 55 | 56 | 54 |
| Diff. Rückprallelast. (70°C-RT) | | 10 | 14 | 10 | 13 | 11 | 11 |
| Graves b. 100 °C | N/mm | 52 | 62 | 52 | 52 | 52 | 55 |
| HSTE | MJ/m³ | 5,5 | 6,3 | 5,9 | 6,9 | 7,8 | 9,0 |
| Zugfestigkeit bei RT | MPa | 20 | 21 | 20 | 21 | 20 | 22 |
| Reißdehnung bei RT | % | 510 | 530 | 520 | 530 | 500 | 550 |
| Modul 300 % | MPa | 11 | 11 | 11 | 11 | 11 | 10 |

| | | | | | | | |
|---|---|---|---|---|---|---|---|
| Verwendete Substanzen aus Tabelle 3 ^{a)} NR: SIR 20 SED, Fa. SED Aneka Bumi Pratama, Indonesien ^{b)} BR: Europrene^{®} neocis BR 40, Fa. Polimeri Europa, Italien ^{c)} SBR: Nipol^{®} NS112R, Fa. Zeon, Japan ^{d)} SBR: Nipol^{®} NS210R, Fa. Zeon, Japan ^{e)} SBR: Sprintan SLR-4601, Fa. Styron, Deutschland ^{f)} Ruß N339: Jodadsorptionszahl = 90 g/kg, CTAB-Zahl = 88 m²/g ^{g)} Kieselsäure: Ultrasil^{®} VN 3 GR, Fa. Evonik Industries AG, Deutschland ^{h)} Silan: NXT Silane, Fa. Momentive Performance Materials, USA ⁱ⁾ Silan mit 75 % S2: SG SI 996, Fa. Nanjing Shuguang Silane Co. LTD., China ^{j)} Öl: MES, Catenex SNR, Fa. Shell, Petit Couronne, Frankreich ^{k)} Harz: Copolymer aus alpha-Methylstyrol und Styrol, Sylvatraxx® 4401, Fa. Arizona Chemical Company ^{l)} Beschleuniger: TBBS, Rubenamid T/Gr, Fa. General Quimica S.A., Spanien | | | | | | | |

Wie aus der Tabelle 3 hervorgeht, zeigen die erfindungsgemäßen Beispiele E11 und E12 eine höhere Differenz der Rückprallelastizitäten als ihre jeweiligen Vergleichsmischungen V8 bzw.V9. Die erfindungsgemäßen Beispiele E11, E12 und E13 weisen zudem gegenüber den Vergleichsbeispielen verbesserte Reißeigenschaften auf (HSTE, Graves).

**Tabelle 4**

| **Bestandteile** | **Einh**. | **V1** | **E1** | **E1** | **E1** |
|---|---|---|---|---|---|
| NR | phr | 50 | 50 | 50 | 50 |
| BR ^{a)} | phr | 25 | 25 | 25 | 25 |
| SBR ^{b)} | phr | 25 | 25 | 25 | 25 |
| Ruß N339 ^{c)} | phr | 55 | 55 | 55 | 55 |
| Kieselsäure ^{d)} | phr | 10 | 10 | 10 | 10 |
| Silan ^{e)} | phr | 2,5 | 2,5 | 2,5 | 2,5 |
| Weichmacher ^{f)} | phr | 12 | - | - | - |
| Harz ^{g)} | phr | - | 12 | - | - |
| Harz ^{h)} | phr | - | - | 12 | - |
| Harz ⁱ⁾ | phr | - | - | - | 12 |
| Alterungsschutzmittel | phr | 5,5 | 5,5 | 5,5 | 5,5 |
| Stearinsäure | phr | 2 | 2 | 2 | 2 |
| Zinkoxid | phr | 3 | 3 | 3 | 3 |
| Beschleuniger TBBS | phr | 1,4 | 1,4 | 1,4 | 1,4 |
| Elementarer Schwefel | phr | 1,4 | 1,4 | 1,4 | 1,4 |

| **Eigenschaften** | | | | | |
|---|---|---|---|---|---|
| Mooney ML (1+4) b. 100 °C | Mooney | 70 | 77 | 77 | 76 |
| t₁₀ | min | 2,9 | 2,8 | 2,9 | 2,9 |
| t₉₀ | min | 7,6 | 7,5 | 7,6 | 7,5 |
| Shore Härte bei RT | Shore A | 63 | 64 | 64 | 63 |
| Rückprallelast. bei RT | % | 44 | 40 | 38 | 39 |
| Rückprallelast. bei 70 °C | % | 55 | 52 | 51 | 52 |
| Diff. Rückprallelast. (70°C-RT) | | 11 | 12 | 13 | 13 |
| Graves b. 100 °C | N/mm | 57 | 56 | 52 | 50 |
| HSTE | MJ/m³ | 5,2 | 5,8 | 5,9 | 5,8 |
| Zugfestigkeit bei RT | MPa | 18 | 21 | 21 | 20 |
| Reißdehnung bei RT | % | 438 | 483 | 489 | 473 |
| Modul 300 % | MPa | 12 | 13 | 13 | 13 |
| Grosch Abrieb rel. Wertung | % | 100 | 114 | 117 | 119 |

| | | | | | |
|---|---|---|---|---|---|
| Verwendete Substanzen aus Tabelle 4 ^{a)} BR: Europrene^{®} Neocis BR 40, Fa. Polimeri ^{b)} SSBR : Nipol^{®} NS210R, Fa. Zeon ^{c)} Corax N339: Jodadsorptionszahl = 90 g/kg, CTAB-Zahl = 88 m²/g ^{d)} Kieselsäure: Ultrasil^{®} VN3 GR, Fa. Evonik ^{e)} Silan X50-S^{®}, Fa. Evonik: Silan auf Ruß aufgezogen, 50 Gew.-% Silan Si 69^{®}; 50 Gew.-% Ruß N 330: Rußmenge ist in der Angabe in Tabelle 4 nicht enthalten ^{f)} Öl: Catenex SNR, Fa. Shell, Petit Couronne, Frankreich ^{g)} Harz: Piccotex™ 100, Copolymer aus alpha-Methylstyrol und Vinyltoluol, wie beispielsweise aus der US 2009/0114343 A1 hervorgeht. ^{h)} Harz: Copolymer aus alpha-Methylstyrol und Styrol, Sylvatraxx® 4401, Fa. Arizona Chemical Company ⁱ⁾ Harz: Krystalex™ F100, Harz auf Basis von alpha-Methylstyrol, wie z.B. aus der EP 1474495 B1 hervorgeht. | | | | | |

Wie aus der Tabelle 4 hervorgeht, zeigen die erfindungsgemäßen Kautschukmischungen E14, E15 und E16 mit 12 phr unterschiedlicher Kohlenwasserstoffharze auf Basis von alpha-Methylstyrol verbesserte Abriebeigenschaften nach Grosch im Vergleich zu der Mischung V11 mit 12 phr MES (medium extraction solvate). Gleichzeitig sind bei den erfindungsgemäßen Kautschukmischungen die Indikatoren für den Zielkonflikt Rollwiderstandsverhalten versus Nassgriffeigenschaften (Differenz der Rückprallelastizitäten) und der Reißeigenschaften (HSTE) verbessert.

Ferner wurden mit den Kautschukmischungen V7 und E10 aus Tabelle 2 Fahrzeugreifentests durchgeführt. Hierbei wurden jeweils baugleiche Reifen mit den jeweiligen Kautschukmischungen im Laufstreifen hergestellt.

### Parameter:

Reifengröße 205/75 R 17.5
Lastindex von 124 und Geschwindigkeitssymbol M.

Dabei wurde das Fahrzeug bei allen Tests auf allen Achsen mit jeweils den gleichen Reifen, also alle Reifen die Kautschukmischung V7 im Laufstreifen oder alle Reifen die Kautschukmischung E10 im Laufstreifen, bestückt.

Die Ergebnisse sind in Tabelle 5 zusammengefasst. Hierbei wurde das Bremsen auf nassem Asphalt getestet. Das Bremsen erfolgte aus einer Geschwindigkeit von 80 km/h. Gemessen wurde die Distanz bis zum Stillstand des Fahrzeuges. In Tabelle 5 ist zudem die relative Wertung, die sich aus dem Bremsweg ergibt, angegeben.

Des Weiteren wurde als Indikator für das Handling das Kurvenfahrverhalten auf nasser Fahrbahn getestet.
Hierbei wurde die schnellstmögliche benötigte Durchfahrtzeit auf einer nassen, kreisförmigen Fahrbahn aus Kopfsteinpflaster mit einem Durchmesser von 45 m bestimmt. In Tabelle 5 ist zudem die relative Wertung (Kurvenfahrt), die sich aus der benötigten Durchfahrtzeit ergibt, angegeben.

**Tabelle 5**

| | V7 | E10 |
|---|---|---|
| Bremsweg beim Bremsen auf nassem Asphalt | 47,6 m | 43,2 m |
| Bremsen auf nassem Asphalt, relative Wertung | 100% | 109 % |
| Durchfahrtzeit auf nasser, kreisförmiger Bahn mit 45 m Durchmesser | 17,5 s | 17 s |
| Kurvenfahrt, rel. Wertung | 100 % | 102,6 % |

Wie aus Tabelle 5 ersichtlich ist, zeigt die erfindungsgemäße Kautschukmischung E10 im Laufstreifen im Fahrzeugtest gegenüber der Vergleichsmischung V7 ein verbessertes Nassbremsverhalten und einen verbesserten Indikator für das Handlingverhalten auf nassem Untergrund.

## Patentansprüche

1. Schwefelvernetzbare Kautschukmischung enthaltend
- 45 bis 85 phr wenigstens eines natürlichen und/oder synthetischen Polyisoprens und
- 15 bis 55 phr wenigstens eines Styrol-Butadien-Kautschuks und
- 25 bis 55 phr wenigstens eines Rußes und
- 4 bis 40 phr wenigstens einer Kieselsäure und
- 2 bis 20 phr wenigstens eines Kohlenwasserstoffharzes, wobei das Kohlenwasserstoffharz aus alpha-Methylstyrol und/oder Styrol und/oder Vinyl-Toluol aufgebaut ist.

2. Schwefelvernetzbare Kautschukmischung nach Anspruch 1, **dadurch gekennzeichnet, dass** der Styrol-Butadien-Kautschuk lösungspolymerisiert ist.

3. Schwefelvernetzbare Kautschukmischung nach einem der Ansprüche 1 oder 2, **dadurch gekennzeichnet, dass** sie 0,1 bis 35 phr eines Polybutadiens enthält.

4. Schwefelvernetzbare Kautschukmischung nach einem der Ansprüche 1 bis 3, **dadurch gekennzeichnet, dass** der wenigstens eine Ruß eine Jodadsorptionszahl gemäß ASTM D 1510 von 60 bis 250 g/kg und eine CTAB-Zahl gemäß ASTM D 3765 von 60 bis 240 m²/g aufweist.

5. Schwefelvernetzbare Kautschukmischung nach einem der Ansprüche 1 bis 4, **dadurch gekennzeichnet, dass** das Kohlenwasserstoffharz einen Erweichungspunkt gemäß ASTM E 28 (Ring und Ball) von 70 bis 110 °C aufweist.

6. Schwefelvernetzbare Kautschukmischung nach einem der Ansprüche 1 bis 5, **dadurch gekennzeichnet, dass** das Kohlenwasserstoffharz wenigstens aus alpha-Methylstyrol aufgebaut ist.

7. Schwefelvernetzbare Kautschukmischung nach einem der Ansprüche 1 bis 6, **dadurch gekennzeichnet, dass** sie frei von einem Mineralölweichmacher ist.

8. Fahrzeugluftreifen, **dadurch gekennzeichnet, dass** er in wenigstens einem Bauteil zumindest eine Kautschukmischung nach einem der Ansprüche 1 bis 7 aufweist.

9. Fahrzeugluftreifen nach Anspruch 8, **dadurch gekennzeichnet, dass** es sich bei dem Bauteil um einen Laufstreifen oder bei einem Laufstreifen mit Cap/Base-Aufbau um die Cap handelt.

10. Verwendung einer Kautschukmischung nach einem der Ansprüche 1 bis 7 in Laufstreifen von Fahrzeugluftreifen zur Verbesserung des Fahrzeugluftreifens hinsichtlich des Zielkonfliktes aus Nassgriffeigenschaften, Rollwiderstandsverhalten und Reißeigenschaften.

## Claims

1. Sulphur-crosslinkable rubber mixture comprising
- from 45 to 85 phr of at least one natural and/or synthetic polyisoprene and
- from 15 to 55 phr of at least one styrenebutadiene rubber and
- from 25 to 55 phr of at least one carbon black and
- from 4 to 40 phr of at least one silica and
- from 2 to 20 phr of at least one hydrocarbon resin, where
the hydrocarbon resin is composed of alphamethylstyrene and/or styrene and/or vinyltoluene.

2. Sulphur-crosslinkable rubber mixture according to Claim 1, **characterized in that** the styrenebutadiene rubber has been solution-polymerized.

3. Sulphur-crosslinkable rubber mixture according to Claim 1 or 2, **characterized in that** it comprises from 0.1 to 35 phr of a polybutadiene.

4. Sulphur-crosslinkable rubber mixture according to any of Claims 1 to 3, **characterized in that** the iodine adsorption number of the at least one carbon black in accordance with ASTM D1510 is from 60 to 250 g/kg and the CTAB number thereof in accordance with ASTM D3765 is from 60 to 240 m²/g.

5. Sulphur-crosslinkable rubber mixture according to any of Claims 1 to 4, **characterized in that** the softening point of the hydrocarbon resin in accordance with ASTM E28 (ring and ball) is from 70 to 110°C.

6. Sulphur-crosslinkable rubber mixture according to any of Claims 1 to 5, **characterized in that** the hydrocarbon resin is composed at least of alpha-methylstyrene.

7. Sulphur-crosslinkable rubber mixture according to any of Claims 1 to 6, **characterized in that** it is free from any mineral-oil plasticizer.

8. Pneumatic tyre, **characterized in that** it comprises, in at least one component, at least one rubber mixture according to any of Claims 1 to 7.

9. Pneumatic tyre according to Claim 8, **characterized in that** the component is a tread or in the case of a tread with cap/base structure is the cap.

10. Use of a rubber mixture according to any of Claims 1 to 7 in treads of pneumatic tyres to improve the pneumatic tyre in respect of the conflicting objectives of wet-grip properties, rolling-resistance behaviour and tensile-failure properties.

## Revendications

1. Mélange de caoutchouc réticulable au soufre, contenant
- 45 à 85 pce d'au moins un polyisoprène naturel et/ou synthétique et
- 15 à 55 pce d'au moins un caoutchouc de styrène-butadiène et
- 25 à 55 pce d'au moins un noir de carbone, et
- 4 à 40 pce d'au moins une silice, et
- 2 à 20 pce d'au moins une résine hydrocarbonée,
la résine hydrocarbonée étant formée à partir d'alpha-méthylstyrène et/ou de styrène et/ou de vinyltoluène.

2. Mélange de caoutchouc réticulable au soufre selon la revendication 1, **caractérisé en ce que** le caoutchouc de styrène-butadiène est polymérisé en solution.

3. Mélange de caoutchouc réticulable au soufre selon l'une quelconque des revendications 1 ou 2, **caractérisé en ce qu'**il contient 0,1 à 35 pce d'un polybutadiène.

4. Mélange de caoutchouc réticulable au soufre selon l'une quelconque des revendications 1 à 3, **caractérisé en ce que** ledit au moins un noir de carbone présente un indice d'adsorption d'iode selon ASTM D 1510 de 60 à 250 g/kg et un indice CTAB selon ASTM D 3765 de 60 à 240 m²/g.

5. Mélange de caoutchouc réticulable au soufre selon l'une quelconque des revendications 1 à 4, **caractérisé en ce que** la résine hydrocarbonée présente un point de ramollissement selon ASTM E 28 (bille et anneau) de 70 à 110 °C.

6. Mélange de caoutchouc réticulable au soufre selon l'une quelconque des revendications 1 à 5, **caractérisé en ce que** la résine hydrocarbonée est formée au moins à partir d'alpha-méthylstyrène.

7. Mélange de caoutchouc réticulable au soufre selon l'une quelconque des revendications 1 à 6, **caractérisé en ce qu'**il est exempt d'un plastifiant huile minérale.

8. Pneu automobile, **caractérisé en ce qu'**il comprend dans au moins un composant au moins un mélange de caoutchouc selon l'une quelconque des revendications 1 à 7.

9. Pneu automobile selon la revendication 8, **caractérisé en ce que** le composant est une bande de roulement ou, dans le cas d'une bande de roulement à structure recouvrement/base, le recouvrement.

10. Utilisation d'un mélange de caoutchouc selon l'une quelconque des revendications 1 à 7 dans des bandes de roulement de pneus automobiles pour améliorer le pneu automobile au regard du conflit d'objectifs entre les propriétés d'adhérence sur route humide, le comportement de résistance au roulement et les propriétés de déchirement.
